(19) Europäisches Patentamt
European Patent Office
Office européen des brevets

(11) **EP 3 712 678 A1**

(12) **EUROPÄISCHE PATENTANMELDUNG**

(43) Veröffentlichungstag:
**23.09.2020 Patentblatt 2020/39**

(51) Int Cl.:
**G02B 26/10** *(2006.01)* **G01S 7/481** *(2006.01)*
**G01S 17/931** *(2020.01)* **G02B 26/12** *(2006.01)*

(21) Anmeldenummer: **20160861.9**

(22) Anmeldetag: **04.03.2020**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **18.03.2019 DE 102019106750**

(71) Anmelder: **SICK AG
79183 Waldkirch (DE)**

(72) Erfinder:
• **Engler, Michael
79350 Sexau (DE)**
• **Krämer, Joachim
79189 Bad Krozingen (DE)**
• **Hammes, Markus
79117 Freiburg (DE)**
• **Geisemeyer, Ino
79102 Freiburg (DE)**

(74) Vertreter: **Manitz Finsterwald
Patent- und Rechtsanwaltspartnerschaft mbB
Martin-Greif-Strasse 1
80336 München (DE)**

(54) **OPTISCHER SCANNER**

(57) Ein optischer Scanner umfasst einen Lichtsender zum Aussenden eines Lichtstrahls, eine Strahlablenkeinheit, die dazu ausgebildet ist, den ausgesendeten Lichtstrahl mit einer vorgegebenen Periodendauer periodisch variierend abzulenken, um einen Erfassungsbereich abzutasten, einen Lichtempfänger zum Empfangen von zurückgeworfenem Licht und eine elektronische Steuereinrichtung zum Ansteuern der Strahlablenkeinheit. Die elektronische Steuereinrichtung ist dazu ausgebildet, vor oder während des Betriebs des optischen Scanners die Periodendauer automatisch um einen Differenzbetrag gegenüber einem Nominalwert zu erhöhen oder zu verringern, um einem Übersprechen zwischen dem optischen Scanner und einen weiteren optischen Scanner entgegenzuwirken.

EP 3 712 678 A1

**Beschreibung**

Die vorliegende Erfindung betrifft einen optischen Scanner mit einem Lichtsender zum Aussenden eines Lichtstrahls, einer Strahlablenkeinheit, die dazu ausgebildet ist, den ausgesendeten Lichtstrahl mit einer vorgegebenen Periodendauer periodisch variierend abzulenken, um einen Erfassungsbereich abzutasten, einem Lichtempfänger zum Empfangen von zurückgeworfenem Licht und einer elektronischen Steuereinrichtung zum Ansteuern der Strahlablenkeinheit.

Optische Scanner werden in vielfältiger Weise für Überwachungs- und Absicherungsaufgaben verwendet. In vielen Anwendungssituationen sind mehrere gleichartige optische Scanner relativ nah beieinander zu montieren. Hierbei kann es zu einer gegenseitigen Beeinflussung der Scanner kommen, was auch als "Übersprechen" bezeichnet wird. Speziell kann der ausgesendete Lichtstrahls eines optischen Scanners direkt oder z. B. durch Spiegelungen in den Empfangsstrahlengang eines anderen optischen Scanners gelangen. Wenn dies nur vereinzelt geschieht, ist es im Allgemeinen unproblematisch, weil bei optischen Scannern üblicherweise eine Mehrfachauswertung oder Mittelung durchgeführt wird. Erstreckt sich die beschriebene Störung eines Scanners durch einen anderen Scanner jedoch über mehrere Messzyklen, kann die Funktion des gestörten Scanners beeinträchtigt sein. Ein problematisches Übersprechen tritt daher insbesondere bei synchron betriebenen Strahlablenkeinheiten auf, also insbesondere dann, wenn die optischen Scanner auf die gleiche Scanzeit oder Periodendauer eingestellt sind. Im schlimmsten Fall kann der gestörte Scanner seine Detektionsfähigkeit verlieren, was insbesondere bei Sicherheitsanwendungen nicht akzeptabel ist.

Um das Problem des Übersprechens zu vermeiden, können von einem Benutzer optische Scanner mit unterschiedlichen Periodendauern bereitgestellt werden. Beispielsweise kann die Periodendauer vom Benutzer bei jedem zu montierenden Scanner geringfügig anders eingestellt werden. Diese Vorgehensweise ist zeitaufwändig und lästig.

Es ist eine Aufgabe der Erfindung, das Montieren und Betreiben von optischen Scannern zu vereinfachen und eine gegenseitige Beeinflussung von gegebenenfalls vorhandenen mehreren Scannern zu verringern bzw. zu vermindern.

Die Lösung der Aufgabe erfolgt durch einen optischen Scanner mit den Merkmalen des Anspruchs 1.

Erfindungsgemäß ist die elektronische Steuereinrichtung dazu ausgebildet, vor oder während des Betriebs des optischen Scanners die Periodendauer automatisch um einen Differenzbetrag gegenüber einem Nominalwert zu erhöhen oder zu verringern, um einem Übersprechen zwischen dem optischen Scanner und einem weiteren optischen Scanner entgegenzuwirken.

Auf diese Weise ist dafür gesorgt, dass auch bei Verwendung von gleichartigen Scannern in einem Raum keine nennenswerte gegenseitige Beeinflussung stattfindet. Da die Erhöhung oder Verringerung der Periodendauer automatisch erfolgt, muss sich der Benutzer nicht um eine entsprechende Verstellung kümmern. Das Gerät kann gegebenenfalls selbst Einfluss auf die voreingestellte Periodendauer nehmen. Die Erfindung ermöglicht somit einen besonders zuverlässigen und sicheren Einsatz von optischen Scannern. Von besonderem Vorteil ist hierbei, dass keine aufwändigen Maßnahmen und insbesondere keine zusätzlichen Geräte erforderlich sind, um das automatische Erhöhen oder Verringern der Periodendauer zu bewerkstelligen. Die entsprechende Funktionalität kann vielmehr auf einfache und kostengünstige Weise in eine bestehende elektronische Steuereinrichtung eines optischen Scanners integriert werden.

Die automatische Erhöhung oder Verringerung der Periodendauer wirkt in vorteilhafter Weise auch gegenseitigen Störungen entgegen, die Einrichtungen zur Feststellung eventueller Verunreinigungen der Frontscheibe des optischen Scanners betreffen.

Ein erfindungsgemäßer optischer Scanner ist vorzugsweise als Laserscanner ausgeführt. Weiterhin ist es bevorzugt, dass ein erfindungsgemäßer optischer Scanner als Sicherheitssensor ausgeführt ist. Bei Sicherheitssensoren ist die Erhöhung der Zuverlässigkeit von besonderer Bedeutung.

Es kann vorgesehen sein, dass der Nominalwert verstellbar ist und die zum Übersprechschutz vorgenommene Erhöhung oder Verringerung der Periodendauer unabhängig von der Verstellung des Nominalwerts ist. Ein Benutzer kann somit den Nominalwert in gewohnter Weise verstellen, beispielsweise um die Scanzeit anzupassen. Der durch die Erfindung ermöglichte Übersprechschutz wird durch diese Verstellung nicht beeinträchtigt.

Gemäß einer Ausführungsform der Erfindung umfasst die Ablenkeinheit einen Drehspiegel, wobei die elektronische Steuereinrichtung dazu ausgebildet ist, zum Erhöhen oder Verringern der Periodendauer die Rotationsfrequenz des Drehspiegels zu erhöhen oder zu verringern. Eine Variation der Rotationsfrequenz eines Drehspiegels ist auf einfache Weise zu bewerkstelligen. Grundsätzlich könnte die Ablenkeinheit jedoch auch z. B. einen Schwingspiegel umfassen.

Eine bevorzugte Ausgestaltung der Erfindung sieht vor, dass der Differenzbetrag ein Zufallswert oder ein Pseudozufallswert ist. Dadurch ist die Wahrscheinlichkeit, dass die Periodendauern von mehreren gleichartigen Scannern um den gleichen Wert erhöht oder verringert werden, außerordentlich gering. Der Differenzbetrag kann von einem in die elektronische Steuereinrichtung integrierten Zufallszahlengenerator oder Pseudozufallszahlengenerator bereitgestellt werden.

Alternativ kann der Differenzbetrag aus einer abgespeicherten Tabelle ausgewählt sein. Die elektronische Steuereinrichtung kann insbesondere dazu ausgebildet sein, bei jedem Betriebsstart und/oder bei jeder Kalibrierung des optischen Scanners um eine Position in der Tabelle weiter zu springen. Dies hat eine ähnliche Wirkung wie die Bereitstellung von Zufallswerten oder Pseudozufallswerten.

Vorzugsweise ist der Differenzbetrag innerhalb eines den Nominalwert umfassenden Toleranzbereichs, insbesondere zufällig, gewählt. Das heißt, es ist bevorzugt, keine übermäßig großen Abweichungen der Periodendauer vom Nominalwert zuzulassen. Auf diese Weise ist ausgeschlossen, dass die Periodendauer und somit die Scanzeit aufgrund der automatischen Erhöhung oder Verringerung einen Wert annimmt, der vom Benutzer nicht gewünscht ist.

Die Breite des Toleranzbereichs kann z. B. so gewählt sein, dass er höchstens ein Viertel und vorzugsweise höchstens ein Zehntel des Nominalwerts beträgt. Es ist bevorzugt, die Periodendauer für den Übersprechschutz nur geringfügig zu variieren. Der Toleranzbereich kann insbesondere so eng sein, dass die erfindungsgemäße Erhöhung oder Verringerung der Periodendauer vom Benutzer nicht wahrgenommen wird. Aus Sicht des Benutzers bleibt also der Nominalwert der Periodendauer trotz automatischer Erhöhung oder Verringerung gleich.

Gemäß einer weiteren Ausgestaltung der Erfindung ist der Differenzbetrag größer als ein vorgegebener Mindestbetrag. Der Mindestbetrag kann insbesondere so gewählt sein, dass die Schwebungsfrequenz, also der Betrag der Differenz der Scanfrequenzen zweier optischer Scanner, ausreichend groß ist. Dadurch ist ein hinreichender Übersprechschutz sichergestellt.

Der Mindestbetrag kann in Abhängigkeit von dem Nominalwert und von einem wirksamen Empfangswinkel des Lichtempfängers gewählt sein. Je größer nämlich der empfindliche Winkelbereich der Empfangsoptik ist, umso größer muss die Differenz der Periodendauern zweier Scanner sein, um ein Übersprechen zu verhindern.

Eine spezielle Ausgestaltung der Erfindung sieht vor, dass der Mindestbetrag zwischen 0,05 % und 0,7 % des Nominalwerts beträgt. Dies hat sich in der Praxis als besonders günstig erwiesen.

Eine weitere Ausführungsform der Erfindung sieht vor, dass die elektronische Steuereinrichtung dazu ausgebildet ist, das Erhöhen oder Verringern der Periodendauer gegenüber dem Nominalwert bei einem, insbesondere bei jedem, Betriebsstart des optischen Scanners durchzuführen. Die Implementierung einer solchen Maßnahme ist besonders einfach.

Alternativ oder zusätzlich kann vorgesehen sein, dass die elektronische Steuereinrichtung dazu ausgebildet ist, das Erhöhen oder Verringern der Periodendauer gegenüber dem Nominalwert bei einem Kalibriervorgang des optischen Scanners durchzuführen. Bei einem solchen erfindungsgemäßen optischen Scanner kann also die Periodendauer bereits werkseitig gegenüber dem Nominalwert erhöht oder verringert sein.

Die elektronische Steuereinrichtung kann auch dazu ausgebildet sein, das Erhöhen oder Verringern der Periodendauer gegenüber dem Nominalwert während des Betriebs des optischen Scanners wiederholt oder kontinuierlich durchzuführen. Dies wirkt einem Übersprechen besonders wirksam entgegen. Je nach Anwendung kann das Erhöhen oder Verringern der Periodendauer periodisch oder stochastisch, stetig oder unstetig erfolgen.

Die elektronische Steuereinrichtung kann auch dazu ausgebildet sein, das Erhöhen oder Verringern der Periodendauer gegenüber dem Nominalwert bei einer erkannten Übersprechsituation durchzuführen. Bei dieser Ausgestaltung wird die Periodendauer lediglich bei Bedarf erhöht oder verringert. Eine während der konkreten Anwendung festgestellte Beeinflussung kann also dadurch verringert bzw. beseitigt werden, dass das Gerät selbst Einfluss auf die Periodendauer nimmt. Insbesondere kann die elektronische Steuereinrichtung auch dazu ausgebildet sein, das Erhöhen oder Verringern der Periodendauer ausschließlich bei einer erkannten Übersprechsituation durchzuführen. Das Erkennen einer Übersprechsituation kann beispielsweise anhand einer Störsignatur in dem Empfangssignal, z.B. einem erhöhten Rauschanteil, oder z.B. anhand einer Rauschsignatur in einem Histogramm erfolgen.

Die Erfindung betrifft auch eine Anordnung aus wenigstens zwei optischen Scannern, die jeweils wie vorstehend beschrieben ausgebildet sind. Bei einer solchen Anordnung ist das Risiko für eine gegenseitige Beeinflussung minimiert. Vorzugsweise weist jeder der optischen Scanner eine elektronische Steuereinrichtung auf, die wie vorstehend beschrieben ausgebildet ist.

Gemäß einer Ausführungsform der Erfindung sind die elektronischen Steuereinrichtungen der wenigstens zwei optischen Scanner dazu ausgebildet, die jeweiligen Periodendauern um unterschiedliche Differenzbeträge zu erhöhen oder zu verringern. Dadurch sind die Strahlablenkeinheiten zeitlich gegeneinander verstimmt und gegenseitige Störungen oder Blendungen treten allenfalls vereinzelt auf.

Weiterbildungen der Erfindung sind auch den abhängigen Ansprüchen, der Beschreibung sowie der beigefügten Zeichnung zu entnehmen.

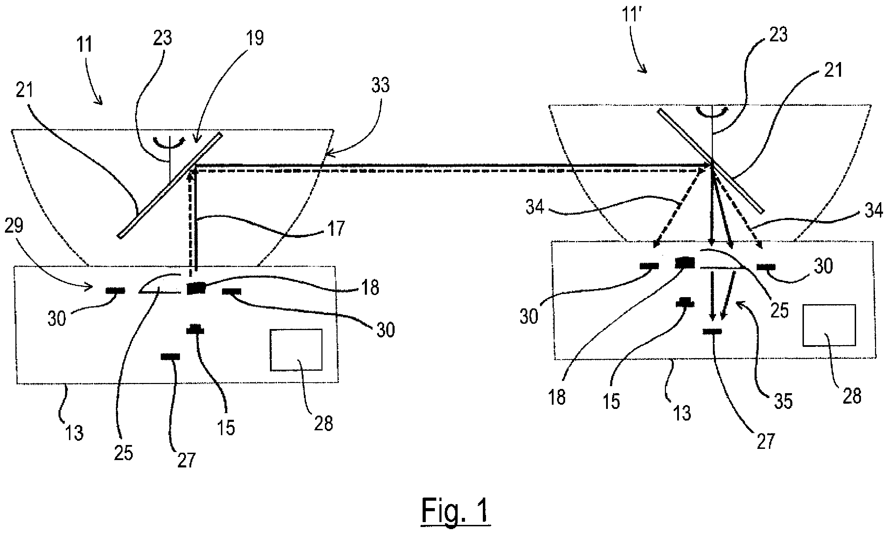

Fig. 1 zeigt eine Anordnung aus zwei erfindungsgemäßen optischen Scannern in schematischer Darstellung.

Der im linken Teil der Fig. 1 gezeigte optische Scanner 11, nachfolgend erster optischer Scanner 11 genannt, weist ein Gehäuse 13 auf, in dem ein Lichtsender 15 zum Aussenden eines Lichtstrahls 17 angeordnet ist. Vorzugsweise umfasst der Lichtsender 15 eine Laserdiode. Wie dargestellt ist dem Lichtsender 15 eine Sendeoptik 18 zugeordnet. In dem Gehäuse 13 ist weiterhin eine Strahlablenkeinheit 19 untergebracht, die dazu ausgebildet ist, den ausgesendeten Lichtstrahl 17 mit einer vorgegebenen Periodendauer periodisch variierend abzulenken, um einen Erfassungsbereich abzutasten. Bei dem dargestellten Ausführungsbeispiel umfasst die Strahlablenkeinheit 19 einen Drehspiegel 21, der um eine Rotationsachse 23 drehend antreibbar ist. Von einem Objekt zurückgeworfenes Licht gelangt über den Drehspiegel 21 und eine Empfangsoptik 25 auf einen Lichtempfänger 27, der ebenfalls in dem Gehäuse 13 angeordnet ist. Bei dem Lichtempfänger 27 kann es sich insbesondere um eine Avalanche-Fotodiode handeln. Eine nicht im Einzelnen dargestellte Auswerteelektronik des ersten optischen Scanners 11 dient dazu, anhand des von dem Lichtempfänger 27 empfangenen Lichts Objekte zu erkennen, die sich im Erfassungsbereich befinden. Die Auswerteelektronik kann dazu ausgebildet sein, nach dem grundsätzlich bekannten Laufzeitverfahren den Abstand eines erkannten Objekts vom ersten optischen Scanner 11 zu ermitteln. Für die Ansteuerung der Strahlablenkeinheit 19 und die Auswertung der Empfangssignale ist der erste optische Scanner 11 mit einer elektronischen Steuereinrichtung 28 ausgestattet.

Der erste optische Scanner 11 weist ferner eine an sich bekannte Einrichtung 29 zur Verunreinigungsmessung auf, die mehrere Verunreinigungs-Lichtempfänger 30 umfasst. Die Verunreinigungs-Lichtempfänger 30 detektieren Licht, das von einem Fenster 33 des Gehäuses 13 gestreut wird, um daraus den Verunreinigungsgrad des Fensters 33 abzuschätzen, wie dies grundsätzlich bekannt ist. Die Verunreinigungs-Lichtempfänger 30 können z. B. ringförmig um die Anordnung aus Sendeoptik 18 und Empfangsoptik 25 verteilt angeordnet sein, insbesondere konzentrisch zur optischen Achse bzw. zur Rotationsachse 23. Die Einrichtung 29 zur Verunreinigungsmessung kann mit einem oder mehreren eigenen Lichtsendern ausgestattet sein oder den Lichtsender 15 nutzen. Weiterhin kann die Verunreinigungsmessung je nach Ausführung in Transmission oder in Reflexion erfolgen.

Der im rechten Teil von Fig. 1 dargestellte optische Scanner 11', nachfolgend zweiter optischer Scanner 11' genannt, ist im Prinzip identisch gestaltet wie der erste optische Scanner 11, wobei gleiche Komponenten mit gleichen Bezugszeichen bezeichnet sind. Die beiden optischen Scanner 11, 11' sind nebeneinander und vertikal leicht versetzt zueinander angeordnet, wie dies häufig bei der Absicherung von Zugangsbereichen der Fall ist. Es versteht sich, dass der dargestellte Abstand und der dargestellte vertikale Versatz der beiden optischen Scanner 11, 11' rein beispielhaft ist und in der Praxis in weiten Bereichen variieren kann.

Bei der dargestellten Konstellation könnte es vorkommen, dass der vom ersten optischen Scanner 11 ausgesendete Lichtstrahl 17 über den Drehspiegel 21 des zweiten optischen Scanners 11' als Störstrahlung 35 auf dessen Lichtempfänger 27 gelangt. In einem solchen Fall wird der zweite optische Scanner 11' gewissermaßen von dem ersten optischen Scanner 11 geblendet. Der zweite optische Scanner 11' wäre nicht mehr in der Lage, Objekte korrekt zu erkennen und insbesondere Entfernungen korrekt zu ermitteln. Es könnte zu einem sogenannten Drop-In kommen, bei welchem die Entfernungswerte sicherheitsgerichtet als zu kurz erfasst werden. Die Verfügbarkeit des zweiten Scanners 11' wäre in einem solchen Fall eingeschränkt. Andererseits kann es zu einem Verlust der Detektion kommen, bei dem die Verfälschung des Empfangssignales eine Entfernungsmessung verhindert und einen sogenannten Drop-Out verursacht. Es könnte vorkommen, dass der zweite optische Scanner 11' aufgrund der Störstrahlung 35 seine Detektionsfähigkeit verliert, was zu einem gefährlichen Grünschaltungs-Zustand führen könnte.

Auch die Einrichtung 29 zur Verunreinigungsmessung des zweiten optischen Scanners 11' könnte durch den ersten optischen Scanner 11 beeinträchtigt werden. Insbesondere könnten die Verunreinigungs-Lichtempfänger 30 in Abhängigkeit von der Stellung des Drehspiegels 21 von einem ausgesendeten Lichtstrahl 17 des Lichtsenders 15 oder von einem separaten Lichtstrahl eines nicht dargestellten Verunreinigungs-Lichtsenders getroffen werden. Dies ist in Fig. 1 durch die gestrichelten Pfeile 34 veranschaulicht. Diese sind ebenso wie die Pfeile der Störstrahlung 35 in Projektion auf die Papierebene dargestellt, während die zugehörigen tatsächlichen Strahlen schräg zu dieser verlaufen können. Weiterhin müssen nicht alle gezeigten Pfeile dem gleichen Zeitpunkt bzw. der gleichen Stellung des Drehspiegels 21 zugeordnet sein, sondern können zu unterschiedlichen räumlichen Stellungen des Drehspiegels 21 gehören. Daher erscheinen die in der Figur angedeuteten Reflexionen teilweise verkippt oder verzerrt. Die Verfügbarkeit des zweiten optischen Scanners 11' wäre bei einer störenden Einstrahlung auf die Verunreinigungs-Lichtempfänger 30 eingeschränkt. Der zweite optische Scanner 11' könnte hierbei in einen Rotschaltungs-Zustand oder sogar in einen Lockout-Zustand wechseln.

Selbstverständlich gilt Analoges auch für eine Beeinflussung des Scanners 11 durch den Scanner 11'.

Um die genannten Übersprechsituationen zu verhindern, sieht die Erfindung vor, dass die elektronischen Steuereinrichtungen 28 der optischen Scanner 11, 11' jeweils dazu ausgebildet sind, vor oder während des Betriebs des zugehörigen optischen Scanners 11, 11' die Periodendauer automatisch um einen zufällig gewählten Differenzbetrag gegenüber einem Nominalwert zu erhöhen oder zu verringern. Die betreffende Erhöhung oder Verringerung der Periodendauer ist unabhängig von einer bewussten Verstellung des Nominalwerts. Die Erhöhung oder Verringerung der Periodendauer kann beispielsweise über eine Erhöhung oder Verringerung der Scanzeit oder der Scanfrequenz erfolgen. Je nach Ausführungsform kann das Erhöhen oder Verringern der Periodendauer gegenüber dem Nominalwert bei jedem Betriebsstart des optischen Scanners 11, 11' oder im Rahmen der werkseitigen Kalibrierung erfolgen. Alternativ ist es auch möglich, das Erhöhen oder Verringern der Periodendauer ausschließlich dann vorzunehmen, wenn eine Übersprechsituation erkannt wird.

Das automatische Erhöhen oder Verringern der Periodendauer der beiden optischen Scanner 11, 11' sorgt für ein Desynchronisieren der Drehbewegungen der Drehspiegel 21 und wirkt so einem Übersprechen entgegen. Wie vorstehend erwähnt ist ein einmaliges Auftreffen eines ausgesendeten Lichtstrahls 17 auf den Lichtempfänger 27 eines benachbarten Scanners 11' im Allgemeinen unkritisch. Lediglich bei einem wiederholten Auftreffen, wie es bei sich synchron bewegenden Drehspiegeln 21 auftritt, kommt es zu unerwünschten Fehlfunktionen des geblendeten Scanners 11'. Einer Störung der Einrichtung 29 zur Verunreinigungsmessung wird durch das erfindungsgemäße automatische Erhöhen oder Verringern der Periodendauer ebenfalls wirksam entgegengewirkt.

Der Minimal-Unterschied für die Drehfrequenzen zweier optischer Scanner 11, 11' hängt vom wirksamen Empfangswinkel des Lichtempfängers 27 ab und lässt sich beispielsweise anhand der folgenden Formel bestimmen:

$$\varphi <= T \cdot f_S \cdot 360° \qquad (1),$$

wobei $\varphi$ der wirksame Empfangswinkel des Lichtempfängers 27, T die nominelle Periodendauer und $f_S$ die Schwebungsfrequenz $|f_1 - f_2|$ ist.

Beispielsweise beträgt bei einer nominellen Scanzeit von 40 ms und einem wirksamen Empfangswinkel des Lichtempfängers 27 von 0,75° die Schwebungsfrequenz mindestens 0,052 Hz. Der Mindest-Unterschied der Scanzeiten $\Delta T$ beträgt 0,084 ms.

Die elektronischen Steuereinrichtungen 28 sind jeweils dazu ausgebildet, den Differenzbetrag innerhalb eines den Nominalwert umfassenden Toleranzbereichs zufällig zu wählen. Die Breite des Toleranzbereichs beträgt bevorzugt höchstens ein Viertel des Nominalwerts. Beispielsweise kann der Toleranzbereich, in welchem die tatsächlichen Scanzeiten für verschiedene optische Scanner 11, 11' zufällig zu verteilen sind, zwischen 40 ms und 43 ms betragen.

Wenn mehrere erfindungsgemäße optische Scanner 11, 11' in einem Verbund zu montieren sind, müssen diese nicht in umständlicher Weise unterschiedlich konfiguriert werden, das heißt hinsichtlich der Nominalwerte der Periodendauer unterschiedlich eingestellt werden. Da relativ geringe Variationen des Nominalwerts ausreichen, um einem Übersprechen wirksam entgegenzuwirken, bleiben die Nominalwerte und somit die Scanzeiten aus Sicht des Benutzers unverändert.

Durch die Erfindung wird somit die Montage und der Betrieb von optischen Scannern 11, 11' im Verbund beträchtlich vereinfacht.

**Bezugszeichenliste**

| 11, 11' | optischer Scanner |
|---|---|
| 13 | Gehäuse |
| 15 | Lichtsender |
| 17 | Lichtstrahl |
| 18 | Sendeoptik |
| 19 | Strahlablenkeinheit |
| 21 | Drehspiegel |
| 23 | Rotationsachse |
| 25 | Empfangsoptik |
| 27 | Lichtempfänger |
| 28 | elektronische Steuereinrichtung |
| 29 | Einrichtung zur Verunreinigungsmessung |
| 30 | Verunreinigungs-Lichtempfänger |
| 33 | Fenster |
| 34 | erläuternder Pfeil |
| 35 | Störstrahlung |

**Patentansprüche**

1. Optischer Scanner (11, 11')
mit einem Lichtsender (15) zum Aussenden eines Lichtstrahls (17), einer Strahlablenkeinheit (19), die dazu ausgebildet ist, den ausgesendeten Lichtstrahl (17) mit einer vorgegebenen Periodendauer periodisch variierend abzulenken, um einen Erfassungsbereich abzutasten, einem Lichtempfänger (27) zum Empfangen von zurückgeworfenem Licht, und einer elektronischen Steuereinrichtung (28) zum Ansteuern der Strahlablenkeinheit (19),
wobei die elektronische Steuereinrichtung (28) dazu ausgebildet ist, vor oder während des Betriebs des optischen Scanners (11, 11') die Periodendauer automatisch um einen Differenzbetrag gegenüber einem Nominalwert zu erhöhen oder zu verringern, um einem Übersprechen zwischen dem optischen Scanner (11, 11') und einem weiteren optischen Scanner (11, 11') entgegenzuwirken.

2. Optischer Scanner nach Anspruch 1,
wobei die Ablenkeinheit (19) einen Drehspiegel (21) umfasst und die elektronische Steuereinrichtung (28) dazu ausgebildet ist, zum Erhöhen oder Verringern der Periodendauer die Rotationsfrequenz des Drehspiegels (21) zu erhöhen oder zu verringern.

3. Optischer Scanner nach Anspruch 1 oder 2,
wobei der Differenzbetrag ein Zufallswert oder ein Pseudozufallswert ist.

4. Optischer Scanner nach Anspruch 1 oder 2,
wobei der Differenzbetrag aus einer abgespeicherten Tabelle ausgewählt ist.

5. Optischer Scanner nach einem der vorstehenden Ansprüche,
wobei der Differenzbetrag innerhalb eines den Nominalwert umfassenden Toleranzbereichs, insbesondere zufällig, gewählt ist.

6. Optischer Scanner nach Anspruch 5,
wobei die Breite des Toleranzbereichs höchstens ein Viertel und vorzugsweise höchstens ein Zehntel des Nominalwerts beträgt.

7. Optischer Scanner nach einem der vorstehenden Ansprüche,
wobei der Differenzbetrag größer ist als ein vorgegebener Mindestbetrag.

8. Optischer Scanner nach Anspruch 7,
wobei der Mindestbetrag in Abhängigkeit von dem Nominalwert und von einem wirksamen Empfangswinkel des Lichtempfängers (27) gewählt ist.

9. Optischer Scanner nach Anspruch 7 oder 8,
wobei der Mindestbetrag zwischen 0,05% und 0,7% des Nominalwerts beträgt.

10. Optischer Scanner nach einem der vorstehenden Ansprüche,
wobei die elektronische Steuereinrichtung (28) dazu ausgebildet ist, das Erhöhen oder Verringern der Periodendauer gegenüber dem Nominalwert bei einem, insbesondere bei jedem, Betriebsstart des optischen Scanners (11, 11') durchzuführen.

11. Optischer Scanner nach einem der vorstehenden Ansprüche,
wobei die elektronische Steuereinrichtung (28) dazu ausgebildet ist, das Erhöhen oder Verringern der Periodendauer gegenüber dem Nominalwert bei einem Kalibriervorgang des optischen Scanners (11, 11') durchzuführen.

12. Optischer Scanner nach einem der vorstehenden Ansprüche,
wobei die elektronische Steuereinrichtung (28) dazu ausgebildet ist, das Erhöhen oder Verringern der Periodendauer gegenüber dem Nominalwert während des Betriebs des optischen Scanners (11, 11') wiederholt oder kontinuierlich durchzuführen.

13. Optischer Scanner nach einem der vorstehenden Ansprüche,
wobei die elektronische Steuereinrichtung (28) dazu ausgebildet ist, das Erhöhen oder Verringern der Periodendauer gegenüber dem Nominalwert bei einer erkannten Übersprechsituation durchzuführen.

14. Anordnung aus wenigstens zwei optischen Scannern (11, 11'), die jeweils nach einem der vorstehenden Ansprüche ausgebildet sind.

15. Anordnung nach Anspruch 14,
wobei die elektronischen Steuereinrichtungen (28) der wenigstens zwei optischen Scanner (11, 11') dazu ausgebildet sind, die jeweiligen Periodendauern um unterschiedliche Differenzbeträge zu erhöhen oder zu verringern.

Fig. 1

**Europäisches Patentamt**
**European Patent Office**
**Office européen des brevets**

## EUROPÄISCHER RECHERCHENBERICHT

Nummer der Anmeldung

EP 20 16 0861

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | JP 2005 221333 A (HOKUYO AUTOMATIC CO) 18. August 2005 (2005-08-18) * Absätze [0001] - [0043]; Abbildungen 1-11 * | 1-15 | INV. G02B26/10 G01S7/481 G01S17/931 G02B26/12 |
| | ----- | | |
| X | JP 2011 112503 A (DENSO WAVE INC) 9. Juni 2011 (2011-06-09) * Absätze [0001] - [0098]; Abbildungen 1-6 * | 1-15 | |
| | ----- | | |
| X | DE 10 2016 224304 A1 (BOSCH GMBH ROBERT [DE]) 7. Juni 2018 (2018-06-07) * Absätze [0010] - [0012]; Abbildungen 1-3 * | 1,2,14 | |
| | ----- | | |

**RECHERCHIERTE SACHGEBIETE (IPC)**

G02B
G01S

Der vorliegende Recherchenbericht wurde für alle Patentansprüche erstellt

| Recherchenort | Abschlußdatum der Recherche | Prüfer |
|---|---|---|
| München | 15. Juli 2020 | Baur, Christoph |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument

.................................................................
& : Mitglied der gleichen Patentfamilie, übereinstimmendes
Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 20 16 0861

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

15-07-2020

| Im Recherchenbericht angeführtes Patentdokument | Datum der Veröffentlichung | Mitglied(er) der Patentfamilie | Datum der Veröffentlichung |
|---|---|---|---|
| JP 2005221333 A | 18-08-2005 | KEINE | |
| JP 2011112503 A | 09-06-2011 | JP 5428804 B2<br>JP 2011112503 A | 26-02-2014<br>09-06-2011 |
| DE 102016224304 A1 | 07-06-2018 | KEINE | |

EPO FORM P0461

Für nähere Einzelheiten zu diesem Anhang : siehe Amtsblatt des Europäischen Patentamts, Nr.12/82